**Europäisches Patentamt**

**European Patent Office**

**Office européen des brevets**

(19)

(11) Veröffentlichungsnummer : **0 309 385 B1**

(12)

# EUROPÄISCHE PATENTSCHRIFT

(45) Veröffentlichungstag der Patentschrift :
**03.06.92 Patentblatt 92/23**

(51) Int. Cl.$^5$ : **H01H 33/56**

(21) Anmeldenummer : **88730205.7**

(22) Anmeldetag : **07.09.88**

(54) **Elektrischer Druckgas-Leistungsschalter, insbesondere SF6-Hochspannungs-Leistungsschalter.**

(30) Priorität : **23.09.87 DE 3732471**

(43) Veröffentlichungstag der Anmeldung :
**29.03.89 Patentblatt 89/13**

(45) Bekanntmachung des Hinweises auf die
Patenterteilung :
**03.06.92 Patentblatt 92/23**

(84) Benannte Vertragsstaaten :
**CH DE FR LI SE**

(56) Entgegenhaltungen :
**DE-A- 2 529 733**
**DE-A- 2 607 158**
**DE-U- 8 430 184**

(73) Patentinhaber : **SIEMENS
AKTIENGESELLSCHAFT
Wittelsbacherplatz 2
W-8000 München 2 (DE)**

(72) Erfinder : **Beier, Helmut
Nusshäherstrasse 37
W-1000 Berlin 27 (DE)**
Erfinder : **Knuth, Wolfgang, Dipl.-Ing.
Kneippstrasse 14a
W-1000 Berlin 28 (DE)**

EP 0 309 385 B1

## Beschreibung

Die Erfindung bezieht sich auf einen elektrischen Druckgas-Leistungschalter, insbesondere $SF_6$-Hochspannungs-Leistungsschalter mit mindestens einem außen liegenden Dichtewächter mit Referenzvolumen, der mit den geschlossenen Gasräumen des Schalters verbunden ist und elektrische Kontakte aufweist, die zu einer Schutz- bzw. Meldeanlage führen, die in einem Steuerschrank untergebracht ist.

Eine derartige Verwendung von Dichtewächtern bei elektrischen Druckgas-Leistungsschaltern ist üblich und insbesondere aus der DE-A-26 07 158 and der DE-A-25 29 733 bekannt. Der Dichtewächter mit dem Referenzvolumen überwacht die Gasräume im Lösch- bzw. Isoliersystem des Schalters und löst ein Warnsignal oder eine Sperrung aus, wenn die Dichte des Gases für eine sichere Ausschaltung nicht mehr ausreicht. Bei der selbsttätigen Überwachung durch den Dichtewächter werden mit Hilfe des Referenzvolumens Veränderungen der Umweltbedingungen, insbesondere Druck und Temperatur, und auch, eventuell durch Verwendung mehrerer Dichtewächter, Fehler im Überwachungssystem selbst kompensiert. Ein Dichtewächter mit Referenzvolumen muß so angeordnet sein, daß er sich in der Außenluft befindet, um die gleiche Umgebungstemperatur wie der Schalter zu haben. Dabei besteht das Problem, daß die elektrischen Kontakte, die mit der Schutz-bzw. Meldeanlage verbunden werden, leicht verschmutzen bzw. betauen können.

Der Erfindung liegt daher die Aufgabe zugrunde, die Funktions- und Wartungsfähigkeit des bei einem elektrischen Druckgas-Leistungsschalter eingesetzten Dichtewächters mit Referenzvolumen zu verbessern.

Zur Lösung dieser Aufgabe ist gemäß der Erfindung ein elektrischer Druckgas-Leistungsschalter der eingangs beschriebenen Art so ausgebildet, daß der Dichtewächter jeweils für die elektrischen Kontakte einen einseitig offenen Anschlußraum aufweist und mit einem Anschlußblock verbunden ist, in dem die Rohranschlüsse zur Verbindung mit den Gasräumen und zur Wartung bzw. Füllung liegen, daß der Anschlußraum in einer Öffnung einer Wand des Steuerschranks zu dessen Innern geöffnet hineinragt, deren Ränder die Seitenwände des Anschlußraumes mit Abstand umgeben, und eine Dichtmanschette aus elastischem Material trägt, welche die Ränder der Öffnung in der Wand des Steuerschranks überdeckt und an diesen befestigt ist, und daß am Anschlußblock mindestens ein Tragbügel vorgesehen ist, wobei jeder Tragbügel ohne Verbindung zur Dichtmanschette an der Wand des Steuerschranks befestigt ist.

Der einseitig offene Anschlußraum für die elektrischen Kontakte wird in das Innere des Steuerschranks geführt, während der Dichtewächter selbst im Außenraum verbleibt, wo die Außentemperatur direkt auf ihn einwirkt. Die elektrischen Kontakte liegen dagegen geschützt im Innenraum des Steuerschranks, der im allgemeinen auch beheizt ist. Eine Betauung oder Verschmutzung kann dadurch nicht auftreten. Da eine direkte Befestigung bzw. Verbindung des Anschlußraumes mit der Wand des Steuerschranks vermieden ist, werden Schwingungen oder auf den Steuerschrank einwirkende Stoßkräfte, wie sie beim Schalten auftreten können, nicht auf den Dichtewächter übertragen, so daß dieser in seiner Funktionsfähigkeit nicht beeinflußt ist.

Die für den Betrieb des Dichtewächters erforderlichen schweren Teile mit dem Rohranschluß zur Verbindung zu den Gasräumen des Schalters und dem Rohranschluß zur Füllung und Wartung sind außerdem zu einem Anschlußblock zusammengefaßt, der separat, ohne Verbindung zur Dichtmanschette, direkt an der Wand des Steuerschranks befestigt und von dieser getragen ist.

Es ist vorteilhaft, im Rohranschluß, der zu den Gasräumen des Schalters führt, ein Rückschlagventil vorzusehen, das bei Entfernung des Rohranschlusses vom Anschlußblock selbsttätig schließt. Dadurch wird vermieden, daß bei einer Wartung oder einem Auswechseln des Dichtewächters, wofür der Rohranschluß vom Anschlußblock entfernt werden muß, Gas aus den Gasräumen des Schalters entweicht. Dafür ist es weiterhin zweckmäßig, diesen Rohranschluß mit einer Steckdichtung gegenüber den Anschlußblock zu versehen, um auch den geringen Weg zu überbrücken, der erforderlich ist, bis der Ventilteller des Rückschlagventils selbsttätig geschlossen hat.

Die Anordnung oder Gestaltung des Tragbügels des Anschlußblocks ist so zu wählen, daß eine zu starke Erwärmung des Dichtewächters durch Sonneneinstrahlung vermieden wird. Man kann dafür zwei Tragbügel um 90° versetzt anordnen, von denen der eine oben am Anschlußblock befestigt ist. Es wäre aber auch zweckmäßig, den Tragbügel topfartig zu gestalten und mit Belüftungsöffnungen zu versehen. Der Dichtewächter liegt dann im Innern des Tragbügels, so daß eine direkte Sonneneinstrahlung verhindert ist, der Dichtewächter aber dennoch für die Außenluft frei zugänglich bleibt. Dadurch werden Fehlanzeigen infolge unterschiedlicher Zeitkonstanten der Erwärmung einzelner, aus unterschiedlichem Material bestehender Teile vermieden.

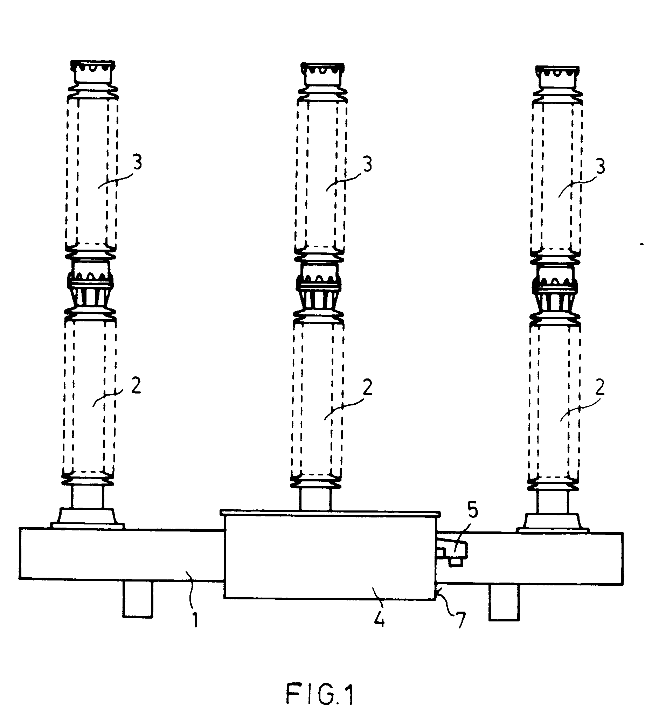

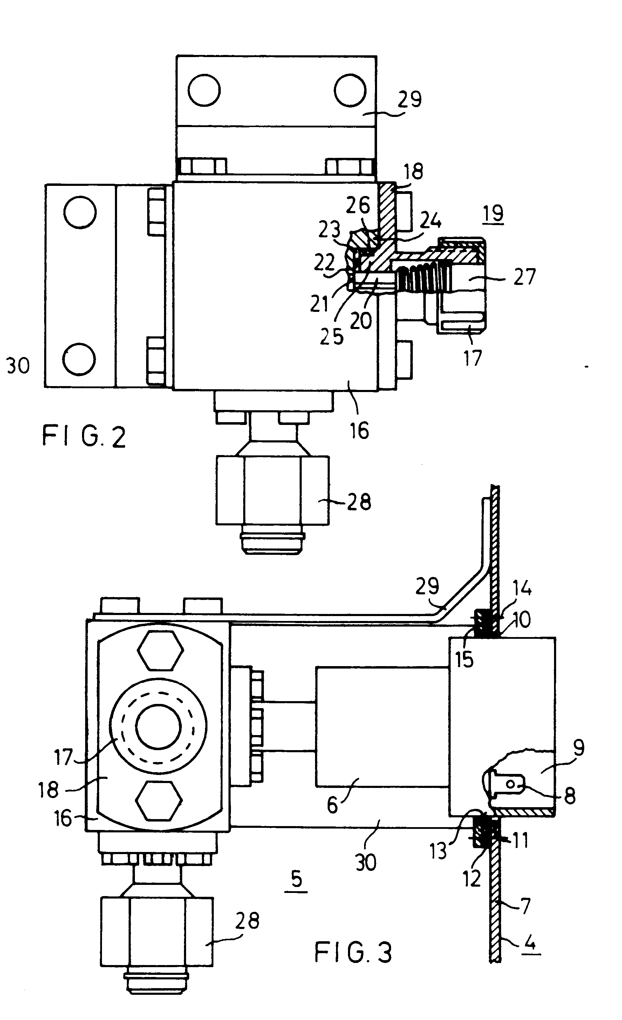

Im folgenden sei die Erfindung noch anhand des in den Figuren 1 bis 3 der Zeichnung dargestellten Ausführungsbeispiels näher erläutert. Figur 1 zeigt schematisch eine Ansicht eines elektrischen Druckgas-Leistungsschalters mit einen am Steuerschrank angeordneten Dichtewächter. Figur 2 zeigt eine Ansicht der Seitenwand des Steuerschranks mit dem Dichtewächter, teilweise geschnitten, und in Figur 3 ist eine Rückansicht des Dichtewächters mit teilweise geschnittener Seitenwand des Steuerschranks dargestellt.

Das Schaltergestell 1 eines elektrischen Druckgas-Leistungsschalters, insbesondere eines mit $SF_6$

betriebenen Freiluft-Druckgas-Hochspannungs-Leistungsschalters trägt sowohl die auf Stützisolatoren 2 angeordneten Unterbrechereinheiten 3 des Schalters als auch nicht dargestellte Geräte zum Antrieb der Schaltstücke, sowie den Steuerschrank 4. In diesem sind alle für die Druckerzeugung, Steuerung und Überwachung des Hydrauliksystems, sowie die für die $SF_6$-Gasfüllung des Schalters erforderlichen Baugruppen und Meßeinrichtungen zusammen mit den Anschlußklemmen für die Steuerleitungen untergebracht. Das Innere des Steuerschranks 4 ist beheizbar.

Da ein derartiger in Freiluft aufgestellter Druckgas-Leistungsschalter in seiner Funktionsfähigkeit von dem in seinem Gasräumen vorhandenen Gas, insbesondere $SF_6$, abhängig ist, weist der Schalter eine Gasüberwachungseinheit 5 mit einem Dichtewächter 6 mit Referenzvolumen auf, die an der Seitenwand 7 des Steuerschranks 4 angeordnet ist. Diese Gasüberwachungseinheit 5 stellt sicher, daß der Leistungsschalter nur in demjenigen Bereich von Drücken und Temperaturen betrieben werden kann, in dem das volle Schaltvermögen gegeben ist. Bei fallender Gasdichte veranlaßt der Dichtewächter 6 über die an seine elektrischen Kontakte 8 angeschlossene Schutz- bzw. Meldeanlage zunächst eine Warnung gegen eine Vornahme von Schalthandlungen und danach eine Sperrung der Antriebsvorrichtungen des Schalters.

Die elektrischen Kontakte 8 des Dichtewächters 6 liegen in einen einseitig offenen kreiszylindrischen Anschlußraum 9. Dieser durchsetzt eine Öffnung 10 in der Seitenwand 7 des Steuerschranks 4, deren Ränder 11 den Anschlußraum 9 mit Abstand umgeben. Um diese Öffnung 10 zu verschließen, trägt der Anschlußraum 9 eine elastische Dichtmanschette 12 aus Gummi. Dazu ist der Anschlußraum 9 durch eine kreisrunde, mittige Öffnung 13 der Dichtmanschette 12 gesteckt, die so bemessen ist, daß sie sich beim Hereinstecken des Anschlußraumes 9 weiten muß und infolge ihrer Elastizität fest und dichtend an der Außenwand des Anschlußraumes 9 anliegt.

Diese Dichtmanschette 12 ist ihrerseits viereckig gestaltet und überdeckt die Ränder 11 in der Seitenwand 7 des Steuerschranks 4 soweit, daß nur angedeutete Befestigungsschrauben 14 mit Leichtigkeit Platz finden. Um eine gleichmäßige Flächenanpressung der Dichtmanschette 12 an der Seitenwand 7 zu erzielen, sind die Ränder der Dichtmanschette 12 längs ihres Umfanges von einer ebenfalls viereckigen Abdeckscheibe 15 bedeckt, die von den Befestigungsschrauben 14 durchsetzt ist. Auf diese Weise ist erreicht, daß der Anschlußraum 9 mit den elektrischen Kontakten 8 in das Innere des Steuerschranks 4 hineinragt, von dort aus offen zugänglich ist und außerdem an der Seitenwand 7 so abdichtend befestigt ist, daß Schwingungen des Steuerschrankes 4 oder auf diesen einwirkende Stoßkräfte nicht auf den Dichtewächter 6 übertragen werden.

Der Dichtewächter 6 liegt außerhalb des Steuerschranks 4 und ist somit der Umgebungsluft frei zugänglich. Der Dichtewächter 6 muß außerdem mit den zu überwachenden Gasräumen des Schalters in den Stützisolatoren 2 und den Unterbrechereinheiten 3 in Verbindung stehen. Dazu ist an einem separat ausgebildeten Anschlußblock 16 ein Rohranschluß 17 vorgesehen, der über einen Flansch 18 am Anschlußblock 16 befestigt ist. Im Innern des Rohranschlusses 17 liegt das Rückschlagventil 19, dessen Ventilstößel 20 mit seiner Stirnwand 21 gegen den Boden 22 einer Ansenkung 23 in einer Innenwand 24 des Anschlußblockes 16 anliegt. Dadurch wird das Rückschlagventil 19 während des normalen Betriebes des Dichtewächters 6 in offener Stellung gehalten.

Im Mittelteil des Flansches 18 des Rohranschlusses 17 ist ein Ringansatz 25 vorgesehen, der in die Ansenkung 23 eingreift und von dem Ventilstößel 20 durchsetzt ist. Auf seiner äußeren Mantelfläche, die der Mantelfläche der Ansenkung 23 zugewandt ist, trägt dieser Ringansatz 25 eine Steckdichtung 26. Muß nun zu Wartungszwecken oder zum Austausch des Dichtewächters 6 der mit dem Gasräumen des Schalters verbundene Rohranschluß 17 vom Anschlußblock 16 entfernt werden, so verbleibt die Steckdichtung 26 so lange im Bereich der Ansenkung 23, bis das Rückschlagventil 19 die Innenbohrung 27 des Rohranschlusses 17 verschlossen hat. Auf diese Weise ist sichergestellt, daß bei derartigen Wartungsarbeiten kein Gas aus den Gasräumen des Schalters austreten kann. Die Betriebsbereitschaft des Schalters wird also nicht beeinflußt. Der Anschlußblock 16 ist weiterhin mit einem Rohranschluß 28 versehen, mit dem bei der ersten Montage bzw. bei Wartungen eine Nachfüllung der Gasräume des Schalters mit $SF_6$ vorgenommen werden kann.

Zur separaten Befestigung des Anschlußblocks 16 an der Seitenwand 7 des Steuerschranks 4 dienen eigene Tragbügel 29, 30 die außerhalb der Befestigung der Dichtmanschette 12 an der Seitenwand 7 angeschraubt sind. Einer der beiden, der Tragbügel 30, ist oberhalb des Anschlußblocks 16 und des Dichtewächters 6 liegend angeordnet, um diesen gleichzeitig gegen die Einwirkung von Regen oder Sonnenschein zu schützen, ebenso wie gegen herabfallende Gegenstände. Um 90° versetzt dazu angeordnet liegt der zweite Tragbügel 31, der somit die Vorderseite des Dichtewächters 6 und des Anschlußblocks 16 abdeckt und ebenfalls gegen Sonnenschein schützt. Trotzdem hat die umgebende Außenluft leichten Zugang zu dem Dichtewächter 6. Bei anderer Ausrichtung des Schalters kann dieser Tragbügel 31 auch hinter dem Dichtewächter 6 liegen.

Sofern mehrere Dichtewächter 6 am Steuerschrank 4 untereinander liegend befestigt sind, empfiehlt es sich, entweder den Tragbügel 31 soweit zu vergrößern, daß er das Gewicht eines entsprechend größer ausgebildeten Anschlußblocks 16 aufnehmen kann, oder man kann einen weiteren dritten Tragbügel vorsehen.

**Patentansprüche**

1. Elektrischer Druckgas-Leistungsschalter, insbesondere SF$_6$-Hochspannungs-Leistungsschalter mit mindestens einem außen liegenden Dichtewächter (6) mit Referenzvolumen, der mit den geschlossenen Gasräumen des Schalters verbunden ist und elektrische Kontakte (8) aufweist, die zu einer Schutz- bzw. Meldeanlage führen, die in einem Steuerschrank (4) untergebracht ist, **dadurch gekennzeichnet, daß der** Dichtewächter (6) jeweils für die elektrischen Kontakte (8) einen einseitig offenen Anschlußraum (9) aufweist und mit einem Anschlußblock (16) verbunden ist, in dem die Rohranschlüsse (17, 28) zur Verbindung mit den Gasräumen des Schalters und zur Wartung bzw. Füllung liegen, daß der Anschlußraum (9) in eine Öffnung (10) einer Wand (7) des Steuerschrankes (4) zu dessen Innern geöffnet hineinragt, deren Ränder (11) die Seitenwände des Anschlußraumes (9) mit Abstand umgeben, und eine Dichtmanschette (12) aus elastischem Material trägt, welche die Ränder der Öffnung (10) in der Wand (7) des Steuerschranks (4) überdeckt und an diesen befestigt ist, und daß am Anschlußblock (16) mindestens ein Tragbügel (29, 30) vorgesehen ist, wobei jeder Tragbügel (29,30) ohne Verbindung zur Dichtmanschette (12) an der Wand (7) des Steuerschranks (12) befestigt ist.

2. Elektrischer Druckgas-Leistungsschalter nach Anspruch 1, **dadurch gekennzeichnet, daß im Rohran**schluß (17), der zu den Gasräumen des Schalters führt, ein Rückschlagventil (19) vorgesehen ist, das bei Entfernung des Rohranschlusses (17) vom Anschlußblock (16) selbsttätig schließt.

3. Elektrischer Druckgas-Leistungsschalter nach Anspruch 2, **dadurch gekennzeichnet, daß der zu den** Gasräumen führende Rohranschluß (17) mit einer Steckdichtung (26) gegenüber dem Anschlußblock (16) versehen ist.

4. Elektrischer Druckgas-Leistungsschalter nach Anspruch 1, 2 oder 3, **dadurch gekennzeichnet, daß** die an der Wand (7) des Steuerschranks (4) befestigten Ränder der Dichtmanschette (12) längs ihres Umfangs von einer Abdeckscheibe (15) bedeckt sind, die von Befestigungsmitteln (14) durchsetzt ist.

5. Elektrischer Druckgas-Leistungsschalter nach Anspruch 1 oder 4, **dadurch gekennzeichnet, daß der** Anschlußraum (9) zylindrisch ausgebildet ist und eine mittige kreisförmige Öffnung (13) einer viereckigen Dichtmanschette (12) durchsetzt.

6. Elektrischer Druckgas-Leistungsschalter nach einem der Ansprüche 1, 4 oder 5, **dadurch gekennzeichnet, daß die Dichtmanschette (12) aus Gummi besteht.**

7. Elektrischer Druckgas-Leistungsschalter nach Anspruch 1, **dadurch gekennzeichnet, daß ein Tragbü**gel (29) oben am Anschlußblock (16) befestigt ist und ein zweiter (30) dazu um 90° versetzt ist.

8. Elektrischer Druckgas-Leistungsschalter nach Anspruch 1 oder 7, **dadurch gekennzeichnet, daß bei** mehreren Dichtewächtern ein dritter Tragbügel am Anschlußblock (16) befestigt ist.

9. Elektrischer Druckgas-Leistungsschalter nach Anspruch 1, **dadurch gekennzeichnet, daß der Trag**bügel topfartig gestaltet und mit Belüftungsöffnungen versehen ist.

**Claims**

1. Gas-blast electric circuit breaker, in particular a high-voltage SF$_6$-circuit breaker having at least one density monitor (6), lying on the outside, with reference volume, which is connected to the closed gas chambers of the circuit breaker and has electrical contacts (8), which lead to a protection or signal installation, which is accommodated in a control cabinet (4), characterized in that the density monitor (6) has a terminal chamber (9), open on one side, for the respective electrical contacts (8), and is connected to a terminal block (16), in which lie the pipe terminals (17, 28) for connection with the gas chambers of the circuit breaker and for maintenance or filling, in that the terminal chamber (9) projects into an opening (10) of a wall (7) of the control cabinet (4) and opens into its interior, the edges (11) of the opening (10) surrounding the side walls of the terminal chamber (9) with clearance, and the terminal chamber carries a sealing sleeve (12) of elastic material, which covers the edges of the opening (10) in the wall (7) of the control cabinet (4) and is fastened to the latter, and in that at the terminal block (16) there is provided at least one support bracket (29, 30), whereby each support bracket (29, 30) is fastened without connection to the sealing sleeve (12) to the wall (7) of the control cabinet (12).

2. Gas-blast electric circuit breaker according to claim 1, characterized in that in the pipe terminal (17), which leads to the gas chambers of the circuit breaker, is provided a back-pressure valve (19) which closes automatically with removal of the pipe terminal (17) from the terminal block (16).

3. Gas-blast electric circuit breaker according to claim 2, characterized in that the pipe terminal (17) leading to the gas chambers is provided with a plug-in sealing (26) opposite the terminal block (16).

4. Gas-blast electric circuit breaker according to claim 1, 2 or 3, characterized in that the edges of the sealing sleeve (12) fastened to the wall (7) of the control cabinet (4) are covered along their circumference by a covering disc (15), through which fastening means (14) pass.

5. Gas-blast electric circuit breaker according to claim 1 or 4, characterized in that the terminal chamber (9) is constructed cylindrically and passes through a central circular opening (13) of a square sealing sleeve (12).

6. Gas-blast electric circuit breaker according to one of claims 1, 4 or 5, characterized in that the sealing sleeve (12) is composed of rubber.

7. Gas-blast electric circuit breaker according to claim 1, characterized in that a support bracket (29) is fastened at the top of the terminal block (16) and a second one (30) is displaced thereto by 90°.

8. Gas-blast electric circuit breaker according to claim 1 or 7, characterized in that with several density monitors a third support bracket is fastened to the terminal block (16).

9. Gas-blast electric circuit breaker according to claim 1, characterized in that the support bracket is formed like a pot and is provided with ventilation openings.


## Revendications

1. Disjoncteur électrique à gaz sous pression, notamment disjoncteur haute tension à $SF_6$, comportant au moins un dispositif de contrôle de densité (6) disposé extérieurement, qui possède des volumes de référence et est raccordé aux chambres à gaz fermées du disjoncteur et comporte des contacts électriques (8), qui aboutissent à une installation de protection et de signalisation, qui est logée dans une armoire de commande (4), caractérisé par le fait que le dispositif de contrôle de densité (6) possède respectivement pour les contacts électriques (8) un logement de raccordement (9) ouvert unilatéralement et est raccordé à un bloc de raccordement (16), dans lequel sont disposés les raccords tubulaires (17,28) destinés à être raccordés aux chambres à gaz du disjoncteur et sont prévus pour la maintenance ou le remplissage, que le logement de raccordement (9) pénètre dans une ouverture (10) et une paroi (7) de l'armoire de commande (4), en étant ouvert en direction de l'intérieur de cette armoire, les bords (11) de l'ouverture entourant à distance les parois latérales du logement de raccordement (9), et comporte un manchon d'étanchéité (12) réalisé en un matériau élastique, qui recouvre les bords de l'ouverture (10) ménagée dans la paroi (7) de l'armoire de commande (4) et est fixé à cette dernière, et que sur le bloc de raccordement (16) est prévu au moins un étrier de support (29,30), chaque étrier de support (29,30) étant fixé, sans raccordement au manchon d'étanchéité (12), à la paroi ( 7 ) de l'armoire de commande (12).

2. Disjoncteur électrique à gaz sous pression suivant la revendication 1, caractérisé par le fait que dans le raccord tubulaire (17), qui aboutit aux chambres à gaz du disjoncteur, est prévue une soupape antiretour (19) qui se ferme automatiquement lors du retrait du raccord tubulaire (17) du bloc de raccordement (16).

3. Disjoncteur électrique à gaz sous pression suivant la revendication 2, caractérisé par le fait que le raccord tubulaire (17), qui aboutit aux chambres à gaz, comporte un élément d'étanchéité enfichable (26) qui établit l'étanchéité par rapport au bloc de raccordement (16).

4. Disjoncteur électrique à gaz sous pression suivant la revendication 1, 2 ou 3, caractérisé par le fait que les bords du manchon d'étanchéité (12), qui sont fixés à la paroi (7) de l'armoire de commande (4), sont recouverts, sur leur pourtour, par un disque de recouvrement, qui est traversé par des moyens de fixation (14).

5. Disjoncteur électrique à gaz sous pression suivant la revendication 1 ou 4, caractérisé par le fait que le logement de raccordement (9) possède une forme cylindrique et traverse une ouverture circulaire centrale (13) d'un manchon d'étanchéité carré (12).

6. Disjoncteur électrique à gaz sous pression suivant l'une des revendications 1, 4 ou 5, caractérisé par le fait que le manchon d'étanchéité (12) est réalisé en caoutchouc.

7. Disjoncteur électrique à gaz sous pression suivant la revendication 1, caractérisé par le fait qu'un étrier de support (29) est fixé à la partie supérieure du bloc de raccordement (16) et qu'un second étrier de support (30) est décalé de 90° par rapport au précédent.

8. Disjoncteur électrique à gaz sous pression suivant la revendication 1 ou 7, caractérisé par le fait que dans le cas de plusieurs dispositifs de contrôle d'étanchéité, un troisième étrier de support est fixé au bloc de raccordement (16).

9. Disjoncteur électrique à gaz sous pression suivant la revendication 1, caractérisé par le fait que l'étrier de support est réalisé en forme de pot et comporte des ouvertures d'aération.

FIG.1

F I G. 2

F I G. 3